# Europäisches Patentamt
# European Patent Office
# Office européen des brevets

(19)

(11) Numéro de publication: **0 079 271**
**B1**

(12)

# FASCICULE DE BREVET EUROPEEN

(45) Date de publication du fascicule du brevet: **29.01.86**

(51) Int. Cl.⁴: **H 01 H 83/20**, H 01 H 71/12

(21) Numéro de dépôt: **82401990.5**

(22) Date de dépôt: **27.10.82**

(54) **Disjoncteur de branchement à controle de la puissance souscrite par un module pilote.**

(30) Priorité: **06.11.81 FR 8120991**

(43) Date de publication de la demande:
**18.05.83 Bulletin 83/20**

(45) Mention de la délivrance du brevet:
**29.01.86 Bulletin 86/05**

(84) Etats contractants désignés:
**BE CH DE GB IT LI NL SE**

(56) Documents cités:
**FR-A-2 283 542**
**FR-A-2 440 609**
**US-A-4 068 283**
**US-A-4 213 165**

(73) Titulaire: **MERLIN GERIN**
**Rue Henri Tarze**
**F-38050 Grenoble Cedex (FR)**

(72) Inventeur: **Canonne, Paul**
**2, rue Emile Eliot**
**F-76360 Barentin (FR)**
Inventeur: **Fouvault, André**
**Société Française Gardy 7, Bld. Romain Rolland**
**F-92120 Montrouge (FR)**

(74) Mandataire: **Kern, Paul et al**
**Merlin Gerin Sce. Brevets 20, rue Henri Tarze**
**F-38050 Grenoble Cedex (FR)**

Courier Press, Leamington Spa, England.

EP 0 079 271 B1

## Description

L'invention est relative à un disjoncteur de branchement inséré dans un réseau multipolaire de distribution à basse tension pour l'alimentation de l'installation électrique d'un abonné dont la puissance souscrite est contrôlée par un module pilote agencé à proximité ou à l'intérieur d'un compteur d'énergie électrique, ledit module comprenant:

un dispositif de sélection du calibre correspondant à la tarification de l'abonnement souscrit par l'abonné,

un circuit électronique de surveillance destiné à la détection des dépoassements du calibre sélectionné au dispositif de sélection,

un indicateur coopérant avec le circuit de surveillance pour signaler lesdits dépassements à l'agent contrôleur,

et un déclencheur à émission actionné en cas de dépassement du calibre par le circuit de surveillance pour envoyer par l'intermédiaire d'un circuit de liaison à fils pilote un ordre d'ouverture à distance au disjoncteur.

Selon un dispositif connu du genre mentionné, une alimentation auxiliaire alimente le module pilote par des conducteurs de raccordement, et le disjoncteur doit être équipé d'un relais spécial pour la réception de l'ordre d'ouverture à distance.

La présente invention a pour but de remédier aux inconvénients précités et de permettre la réalisation d'un module pilote perfectionné à propre courant adaptable à des disjoncteurs de branchement monocalibres ou multi-calibres, à bloc déclencheur magnétothermique ou statique.

Ce but est réalisée par la caractéristique de la revendication 1.

On utilise ainsi le même relais de déclenchement pour le déclencheur différenttiel et le déclencheur à émission, et ce relais est du type polarisé comprenant deux bobines de commande.

Selon une caractéristique de l'invention, le module pilote est à propre courant et comporte par phase un capteur de courant à tore traversé par le conducteur de phase servant d'enroulement primaire et à enroulement secondaire délivrant un signal de sortie destiné à charger un condensateur constituant un réservoir d'énergie adapté à l'alimentation du circuit électronique de surveillance, et en cas de dépassement de la puissance souscrite à l'émission de l'ordre d'ouverture à distance vers lo, première bobine du recouis, et à l'actionnement de l'indicateur.

L'indicateur du module pilote est formé soit par un relais électromécanique du type polarisé à voyant de signalisation solidaire de la palette mobile, soit par un compteur électronique destiné à compter et enregistrer le nombre de dépassements de la puissance souscrite.

Le disjoncteur peut être ajusté en usine à un calibre fixe prédéterminé, par exemple 60A ou 90A en version bipolaire, et 30A ou 60A en version tétrapolaire.

Le disjoncteur peut également être à calibres multiples, par exemple entre 15A et 90A, le changement de calibres étant opéré par un circuit d'ajustage coopérant avec le déclencheur de surcharge du disjoncteur. En cas de dépassement de la puissance souscrite, ledit déclencheur de surcharge provoque le déclenchement local du disjoncteur avant l'émission par le module pilote de l'ordre d'ouverture à distance vers le relais.

L'ouverture à distance du disjoncteur par le module pilote est inhibée en cas d'absence ou de coupure du circuit de liaison à fils pilote. Le dépassement de la puissance souscrite est alors signalé à l'agent par le voyant du bloc pilote.

D'autres avantages et caractéristiques de l'invention resortiront plus clairement de la description qui va suivre de différents modes de réalisation donnés à titre d'exemples non limitatifs et représentés aux dessins annexés, dans lesquels:

la figure 1 montre le schéma général électrique d'un disjoncteur de branchement monophasé télécommandé par le module pilote de contrôle de la puissance souscrite par l'abonné;

la figure 2 illustre le schéma du module pilote;

la figure 3 représente un mode de réalisation de l'indicateur du module pilote;

la figure 4 montre le schéma du module pilote associé à un disjoncteur différentiel à déclencheur de surcharge statique;

la figure 5 représente le module pilote associé à un disjoncteur différentiel à déclencheur de surcharge magnétothermique;

la figure 6 est une vue schématique en perspective du montage du module pilote dans le tableau du compteur d'énergie.

A titre d'exemple, l'invention est décrite par la suite comme étant appliquée à un disjoncteur de branchement bipolaire (phase et neutre) monté dans un réseau monophasé, mais il est évident que les diverses caractéristiques de l'invention sont également applicables aux disjoncteurs ayant un nombre de pôles différents, notamment tétrapolaire (trois phases plus neutre) pour un réseau triphasé.

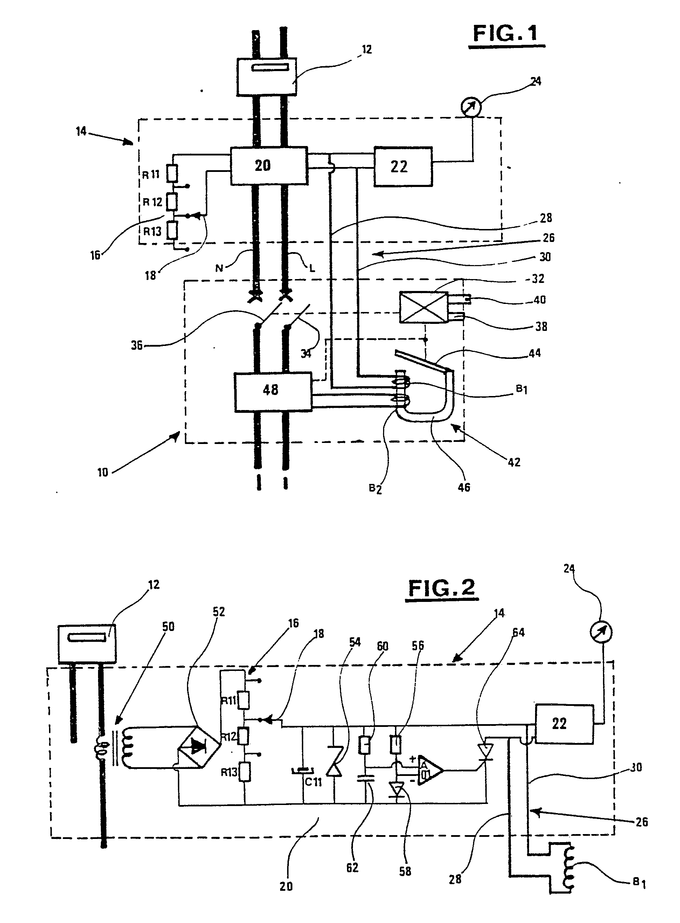

Sur la figure 1, un disjoncteur de branchement 10 bipolaire ou unipolaire plus neutre est connecté en aval d'un compteur 12 d'énergie dans un réseau alternatif monophasé de distribution pour l'alimentation de l'installation électrique à basse tension d'un client ayant souscrit un abonnement prédéterminé auprès d'une compagnie de distribution. Le compteur 12 est généralement logé dans un coffret électrique extérieur accessible à l'agent distributeur tandis que le disjoncteur 10 de branchement est disposé dans le local de l'abonné séparé du coffret du compteur 12 par une distance d variable selon l'éloignement. L'affichage et le contrôle par l'agent du calibre correspondant à la tarification de l'abonnement souscrit par l'abonné, s'opèrent par l'intermédiaire d'un module pilote 14 agencé dans le coffret à proximité ou à l'intérieur du compteur 12.

Le module pilote 14 comporte un dispositif de sélection 16 du calibre, doté par exemple d'une plurité de résistances $R_{11}$, $R_{12}$, $R_{13}$ ... connectées en pont diviseur de tension à curseur 18 de réglage. Le dispositif de sélection 16 coopère avec un circuit électronique de surveillance 20 susceptible de détecter les dépassements de la puissance souscrite correspondant à un calibre prédéterminé affiché au dispositif 16. La sortie du circuit de surveillance 20 est reliée à un dispositif indicateur 22 à voyant extérieur 24 de signalisation logé dans le coffret. Entre le circuit de surveillance 20 du module pilote 14 et le disjoncteur de branchement 10 est connecté un circuit de liaison 26 à fils pilote 28, 30 destiné à envoyer un odre d'ouverture à distance à une première bobine $B_1$ de déclenchement du disjoncteur 10 en cas de dépassement de la puissance souscrite.

Le disjoncteur de branchement 10 monophasé peut être à calibre fixe ou à calibre multiple, et comporte un mécanisme de manoeuvre 32 des contacts 34, 36 des deux pôles associés aux conducteurs de phase L et de neutre N. Le mécanisme 32 du disjoncteur 10 est actionné soit manuellement par un bouton de déclenchement 38 et un bouton de réarmement 40, soit automatiquement par l'intermédiaire d'une barre de déclenchement (non représente) pilotée par un bloc déclencheur 48 à relais électromagnétique de déclenchement 42. Ce dernier du type polarisé comprend une palette 44 mobile coopérant avec la barre de déclenchement, et une culasse 46 ferromagnétique fixe supportant une deuxième bobine $B_2$ de déclenchement alimentée par le bloc déclencheur 48 équipé d'un déclencheur de surcharge du type statique à circuit long retard et court retard ou du type magnétothermique, et d'un déclencheur différentiel à seuil de déclenchement prédéterminé. Les deux bobines $B_1$ et $B_2$ de déclenchement sont montées sur la culasse 46 du relais 42 de commande qui est ainsi commun au déclencheur différentiel du bloc 48, et au déclencheur à émission du module pilote 14 d'ouverture à distance. Dans le cas d'un disjoncteur 10 de branchement à déclenceur de surcharge statique, la même bobine $B_2$ de déclenchement sert à actionner le realis 42 pour l'ouverture des contacts 34, 36 quelle que soit la nature du courant de défaut détecté par le bloc 48.

Le fonctionnement du disjoncteur 10 et du module pilote 14 à relais 42 de déclenchement commun selon l'invention est le suivant:

Le module pilote 14 logé dans le coffret du compteur 12 des plombé est inviolable, seul l'agent pouvant adjuster le calibre grâce au pont diviseur à résistances $R_{11}$, $R_{12}$, $R_{13}$ du dispositif de sélection 16. Selon la position du curseur 18, le calibre peut être réaglé à une valeur prédéterminée, par exemple 30, 45, 60 ... 90 Ampères, correspondant respectivement dans un réseau monophasé 220 Volts à une puissance souscrite de 6 kW, 9 kW, 12 kW et 18 kW. Lorsque l'intensité du courant circulant dans l'installation de l'abonné est supérieur au calibre sélectionné dans le dispositif 16, le dépassement de la puissance souscrite est détecté par. le circuit de surveillance 20 du module pilote 14, qui envoie simultanément un premier signal de déclenchement dans le circuit de liaison 26 pour l'excitation de la première bobine $B_1$ de déclenchement du relais 42 associé au mécanisme 32 du disjoncteur 10, et un deuxième signal de contrôle vers le dispositif indicateur 22. Le module pilote 14 se comporte ainsi en déclencheur à émission pour l'ouverture à distance des contacts 34, 36 du disjoncteur 10. Le dispositif indicateur 22 et le voyant de signalisation 24 du module 14 sont agencés pour afficher soit directement le dépassement de la puissance, soit avec un retard prédéterminé correspondant au temps normal de déclenchement du disjoncteur 10 suite à l'excitation de la bobine $B_1$ du relais 42.

L'ouverture à distance du disjoncteur 10 par l'action du module pilote 14 est inhibée en cas de coupure accidentelle ou volontaire du circuit de liaison 26. La bobine $B_1$ du relais de déclenchement 42 n'est pas excitée et le dépassement de a puissance souscrite est alors simplement visualisé par le voyant de signalisation 24 du bloc pilote 14 après enregistrement éventuel dans le dispositif indicateur 22.

Le bloc déclencheur 48 du disjoncteur de branchement 10 à protection différentielle peut comporter indifféremment un déclencheur standard magnétothermique, ou un déclencheur électronique, et il est soit monocalibre, soit multicalibres. On verra par la suite que le réglage approprié du déclencheur de surcharge du bloc 48 est susceptible en cas de dépassement de la puissance souscrite de provoquer localement l'ouverture préalable du disjoncteur 10 par excitation de la deuxième bobine $B_2$ du relais 42, avant l'émission par le module pilote 14 du signal de déclenchement à distance à la première bobine $B_1$ du relais 42. Dans ce cas, l'abonné est prévenu du dépassement avant l'intervention du module pilote 14 et du voyant de signalisation 24, qui reste immobile dans une position de repos.

Lorsque la pose du circuit de liaison 26 entre le module pilote 14 et un disjoncteur 10 multicalibres est impossible (cas des installations existantes), le dispositif indicateur 22 signale simplement le dépassement de la puissance.

La figure 2 représente le schéma simplifié du circuit électronique de surveillance 20 agencé dans le module pilote 14. Ce circuit 20 comporte un capteur de courant 50, notamment un transformateur d'intensité à tore dont l'enroulement secondaire fournit un signal proportionnel au courant à surveiller circulant dans l'enroulement primaire formé par le conducteur L de phase. Un pont à diodes 52 redresse le signal de mesure du capteur 50, et la sortie du pont 52 est reliée au pont diviseur de tension à résistances $R_{11}$, $R_{12}$, $R_{13}$... formant le dispositif de sélection 16 du calibre. La tension prélevée au curseur 18 du dispositif de sélection 16 sert à charger un condensateur $C_{11}$ qui constitue un réservoir d'énergi servant à la fois à l'actionnement du dispositif indicateur 22, à l'excitation de la bobine de déclenchement B₁ du relais 42 et à l'alimentation du ou des amplificateurs du circuit 20. Une diode Zener 54 de protection shunte le condensateur C₁₁ et est branchée en parallèle aux bornes d'un circuit de polarisation à résistance 56 en série avec une diode 59 connectée à l'entrée négative d'un amplificateur opérationnel A0₁. Aux bornes du condensateur d'accumulation C₁₁ est connecté d'autre part un circuit RC de temporisation à résistance 60 et condensateur 62 série dont le point intermédiaire est relié à l'entrée positive de l'amplificateur opérationnel A0₁. La tension de sortie de l'amplificateur A0₁ pilote un thyristor 64 inséré en série dans le circuit de décharge du condensateur C₁₁. En fonctionnement normal du disjoncteur 10 traversé un courant dont l'intensité est inférieure au calibre sélectionné par le dispositif 16 du module pilote 14, la tension aux bornes du condensateur 62 est insuffisante pour débloquer l'amplificateur opérationnel A0₁.

Lors du dépassement de la puissance souscrite, la tension du condensateur 62 assure le déblocage de l'amplificateur A0₁ qui excite la gâchette du thyristor 64. La conduction de ce dernier provoque la décharge du condensateur C₁₁ dans le dispositif indicateur 22 et dans le circuit de liaison 26 pour l'excitation de la bobine B₂ de déclenchement à distance du relais 42. La bobine B₂ peut être connectée en série ou en parallèle avec le dispositif indicateur 22. Le module pilote 14 est à propre courant et ne nécessite aucune connexion pour une alimentation auxiliaire.

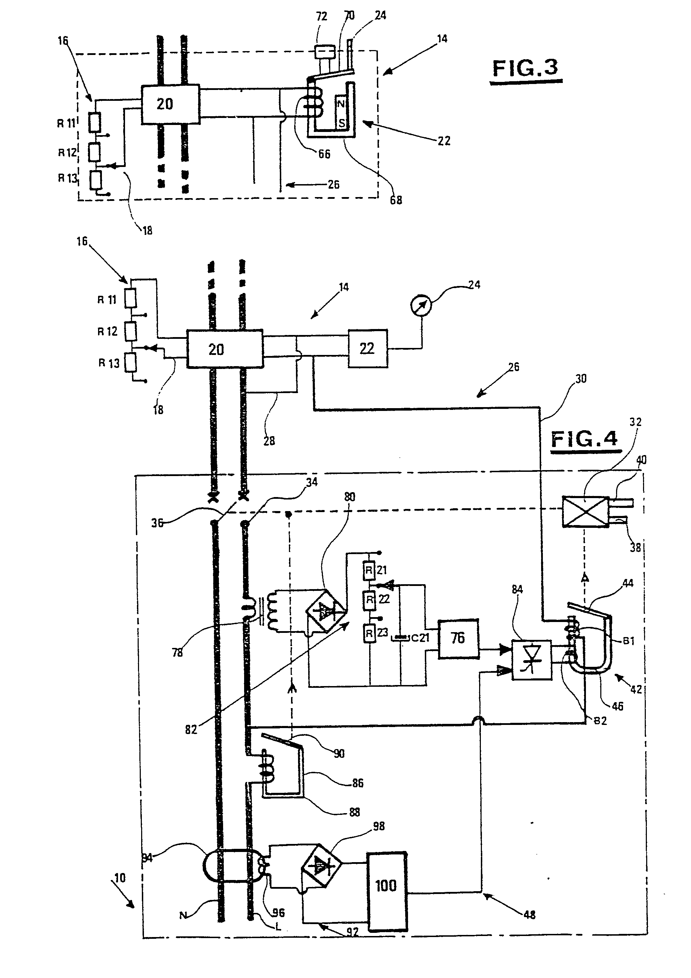

La figure 3 montre un mode de réalisation du dispositif indicateur 22 à voyant de signalisation 24. L'ensemble est constitué par un relais électromagnétique 68 polarisé du même type que celui du relais 42 de déclenchement du mécanisme 32 du disjoncteur 10. Un enroulement de commande 66 monté sur la culasse du relais 68 est alimenté par le dispositif de surveillance 20 à propre courant lors de la conduction du thyristor 64, et provoque le décollement de la palette 70 mobile vers une position écartée. Le voyant 24 mécanique solidaire de la palette 70 se trouve en saillie pour indiquer le dépassement de la puissance souscrite à l'agent. Ce dernier opère le réarmement du relais 68 de signalisation par enfoncement d'un bouton poussoir 72 solicitant la palette 70 en position d'attraction contre la culasse.

Selon une autre variante (non représentée), le dispositif indicateur 22 pourrait être réalisé par un compteur électronique destiné à compter le nombre de dépassements de la puissance souscrite. Un enregistreur associé au compteur indiquerait la date exacte de ces dépassements à l'agent contrôleur.

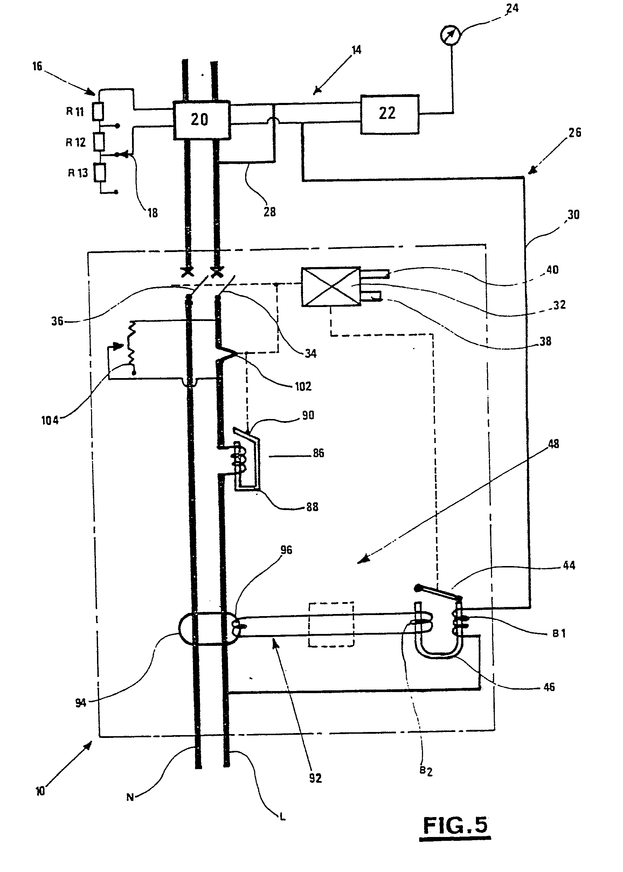

La figure 4 illustre l'application d'un module pilote 14 selon l'invention à un disjoncteur de branchement 10 à bloc déclencheur 48 statique. Les mêmes repères seront utilisés par la suite pour désigner des pièces ou composants identiques ou similaires.

Le bloc déclencheur 48 du disjoncteur 10 est par exemple du type décrit dans la demande de brevet européen N° 61.364 (Art. 5413) EPO déposé par la demanderesse. Ce bloc 48 comporte un déclencheur statique de surcharge à circuit électronique de traitement 76 ayant un premier circuit long rétard et en deuxième circuit court retard pilotés par un capteur de courant 78 similaire à celui 50 du module pilote 14. Le capteur 78 fournit un signal proportionnel au courant parcourant le conducteur L du disjoncteur 10, et un point redresseur 80 redresse ce signal appliqué à un circuit d'adjustage 82 du calibre du disjoncteur par l'abonné. Ce circuit d'ajustage 82 ressemble à celui du dispositif de sélection 16 du module pilote 14, et comprend des résistances R₂₁, R₂₂, R₂₃ ... agencées en pont diviseur de tension à curseur de réglage. Un condensateur C₂₁ accumulateur d'énergie est inséré entre le pont de résistances et le circuit électronique 76 dont la sortie pilote un circuit de commutation 84 relié à la deuxième bobine B₂ de déclenchement du relais 42. Le bloc 48 comprend de plus un déclencheur standard électromagnétique 86 instantané à seuil de déclenchement fixe, sensible à des courants de court-circuit élevés. Ce déclencheur 86 est muni d'une culasse 88 entourée par un ou plusieurs tours du conducteur L, et d'une palette 90 pivotante coopérant mécaniquement avec la barre de déclenchement du mécanisme 32. Un défaut différentiel est détecté dans le bloc 48 par un déclencheur différentiel 92 à tore 94 entourant les conducteurs L et N. L'enroulement secondaire 96 du tore 94 est connecté à un pont redresseur 98 branché à un circuit électronique de commande 100 fixant le seuil de déclenchement différentiel. Ce circuit 100 coopère avec le circuit de commutation 84 pour exciter la bobine B₂ du relais 42 après dépassement de seuil. Les circuits électroniques 76 et 100 sont à propre courant et ne nécissitent aucune source d'alimentation auxiliaire.

Le circuit de liaison entre le module pilote 14 et le disjoncteur 10 comprend un fil pilote 30 unique, l'autre 28 fil pilote de connexion de la première bobine B₁ de déclenchement étant connecté au conducteur L du réseau jouant le rôle de conducteur de retour.

Le fonctionnement du disjoncteur selon la figure 4 est le suivant:

Pour un disjoncteur 10 de branchement monocalibre, le curseur du circuit d'ajustage 82 est fixé en usine dans une position prédéterminée, par exemple à un calibre de 90 Ampères, et l'abonné ne procède à aucun changement de calibre au niveau du disjoncteur 10. Pour une puissance souscrite de 6 kW par exemple, l'agent affiche le calibre 30A au dispositif de sélection 16 du module pilote 14. Lors d'un dépassement de la puissance intervenant pour tout intensité de courant supérieure à 30A, le module pilote 14 se comporte en déclencheur à émission délivrant un ordre de déclenchement à la bobine B₁ du relais 42 pour l'ouverture à distance des contacts 34, 36 du disjoncteur 10. Le dispositif indicateur 22 signale ce dépassement à l'agent.

En cas de discontinuité ou d'absence de circuit de liaison 26, la télécommande du disjoncteur 10 depuis le module pilote 14 est impossible, et le dépassement de la puissance est simplement affichée à l'indicateur 22 du module pilote 14. L'ouverture du disjoncteur 10 sur défaut peut néanmoins intervenir par l'action du déclencheur différentiel 92 ou du déclencheur électromagnétique 86 instantané lors de l'apparition d'un courant de défaut différentiel ou de court-circuit. Le circuit de déclenchement long retard associé au capteur 78 provoque également l'ouverture du disjoncteur 10 par excitation de la bobine de déclenchement $B_2$ du relais 42 lorsqu l'intensité parcourant le disjoncteur 10 dépasse 90 Ampères.

Pour un disjoncteur de branchement 10 multi-calibres, le calibre affiché au circuit d'ajustage 82 du déclencheur statique de surcharge du disjoncteur 10 correspond à celui du dispositif de sélection 16 du module pilote 14, par exemple 30 Ampères pour une puissance souscrite de 6 kW. La constante de temps du circuit de temporisation à résistance 60 et capacité 62 associé à l'amplifi-cateur opérationnel $A0_1$ du module pilote 14 est supérieure à la constante de temps du circuit de temporisation du circuit de déclenchement long retard du bloc 49 du disjoncteur 10, de manière à assurer lors d'un dépassement de la puissance souscrite l'ouverture du disjoncteur 10 due à l'excitation de la bobine $B_2$ par le bloc 48, avant l'émission par le module pilote 14 du signal de déclenchement à distance à la bobine $B_1$ du relais 42. L'abonné est ainsi prévenu du dépassement avant l'invervention du module pilote 14. Pour des dépassements fréquents, l'abonné devra demander une augmentation de la puissance souscrite, par exemple 9 kW ajustée par l'agent sur le calibre 45A du circuit de sélection 16 du module pilote 14. L'abonné pourra ensuite afficher le calibre 45A sur le circuit d'ajustage 82 du disjoncteur 10.

La figure 5 représente l'application d'un module pilote 14 selon l'invention à un disjoncteur de branchement 10 monophasé à bloc déclencheur magnétothermique et différentiel. L'enroulement secondaire 96 du déclencheur différentiel 92 à tore 94 est connecté directement et par l'intermédiaire d'un amplificateur (en pointillé) à la bobine $B_2$ du relais 42 de déclenchement du disjoncteur 10. Le circuit magnétique 46 du relais 42 porte la bobine $B_1$ pilotée par le module pilote 14. Le déclencheur de surcharge est formé par un bilame 102 inséré dans le conducteur L, et coopérant directement avec la barre de déclenchement du mécanisme 32 lors d'une déflexion maximum intervenant après dépassement du calibre affiché sur le disjoncteur. L'abonné peut ajuster ce calibre grâce à des résistances 104 de shuntage du bilame 102. Le fonctionnement de ce dispositif est similaire à celui de la figure 4, et le disjoncteur peut être monocalibre ou multicalibres. Dans le cas d'un disjoncteur 10 multicalibres, le bilame 102 sera réglé pour provoquer lors du dépassement de la puissance souscrite le déclenchement du disjoncteur 10 par déverrouillage du mécanisme 32, avant l'intervention du module 14.

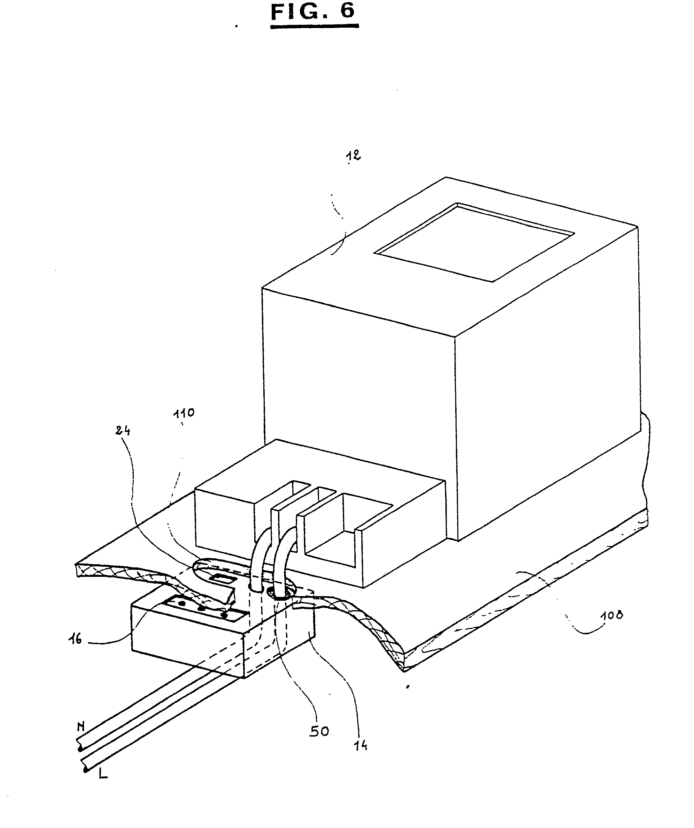

La figure 6 illustre l'agencement du module pilote 14 monté inviolable dans le tableau 108 du compteur 12. Les conducteurs L et N de sortie du compteur 12 traversent une ouverture 110 ménagée dans la face avant du tableau 108, et le module pilote 14 à propre courant est placé sous la face avant du tableau. Le tore du capteur de courant 50 est disposé en regard de l'ouverture 110 et entoure le conducteur L de phase. La mise en place du module pilote 14 ne nécessite aucune connexion de puissance. La face avant est dotée d'un hublot ou d'une partie transparente pour visualiser le voyant 24 de signalisation.

**Revendications**

1. Disjoncteur de branchement (10) inséré dans un réseau multipolaire de distribution à basse tension pour l'alimentation de l'installation électrique d'un abonné dont la puissance souscrite est contrôlée par un module pilote (14) agencé à proxmité ou à l'intérieur d'un compteur (12) d'énergie électrique, ledit module (14) comprenant:

un dispositif de sélection (16) du calibre correspondant à la tarification de l'abonnement souscrit par l'abonné,

un circuit électronique de surveillance (20) destiné à la détection des dépassements du calibre sélectionné au dispositif de sélection (16),

un indicateur (22) coopérant avec le circuit de surveillance (20) pour signaler lesdits dépassements à l'agent contrôleur,

et un déclencheur à émission actionné en cas de dépassement du calibre par le circuit de surveillance (20) pour envoyer par l'intermédiaire d'un circuit de liaison (26) à fils pilote (28, 30) un ordre d'ouverture à distance au disjoncteur (10), caractérisé par le fait que le disjoncteur (10) comporte un mécanisme (32) de commande de déclenchement piloté par un relais polarisé électromagnétique (42) de déclenchement commun, comprenant un circuit magnétique (46) sur lequel sont enroulées une première bobine (B1) déclenchement connectée au module pilote (14) par ledit circuit de liaison (26), et une deuxième bobine (B2) de déclenchement branchée au déclencheur différentiel (92), et que l'ouverture du disjoncteur (10) résulte de l'excitation de l'une quelconque des bobines (B1 ou B2) du relais (42) polarisé, suite à un ordre d'ouverture à distance émis par le déclencheur à émission du module pilote (14), ou à un signal de commande transmis par le déclencheur différentiel lors de l'apparition d'un courant de défaut différentiel résiduel sur le réseau.

2. Disjoncteur de branchement à calibres multiples selon la revendication 1, comprenant de plus un déclencheur de surcharge à seuil réglable, caractérisé par le fait que ledit déclencheur de surcharge est agencé pour provoquer en cas de dépassement de la puissance souscrite, le déclenchement local du mécanisme (32) du disjoncteur (10) par l'action du bloc déclencheur (48), avant l'émission par le module pilote (14) de l'ordre d'ouverture à distance vers la première bobine (B1) du relais (42).

3. Disjoncteur de branchement selon la revendication 2, comprenant un déclencheur électronique de surcharge, caractérisé par le fait que le relais (42) électromagnétique de déclenchement est commun au déclencheur de surcharge, au déclencheur différentiel (92) et au déclencheur à émission du module pilote (14) et que le déclencheur électronique du surcharge comporte un circuit d'ajustage (82) du calibre du disjoncteur (10) et un circuit de temporisation à constante de temps inférieure à celle du circuit de surveillance (20) du module pilote (14) dont le calibre affiché au dispositif de sélection (16) correspond à celui du circuit d'ajustage (82).

4. Disjoncteur de branchement selon la revendication 1, 2 ou 3, caractérisé par le fait que le module pilote (14) est à propre courant et comporte par phase un capteur de courant (50) à tore traversé par le conducteur de phase (L) servant d'enroulement primaire et à enroulement secondaire délivrant un signal de sortie destiné à charger un condensateur ($C_{11}$) constituant un réservoir d'énergie adapté à l'alimentation du circuit électronique de surveillance (20), et en cas de dépassement de la puissance souscrite, à l'émission de l'ordre d'ouverture à distance vers la première bobine (B1) du relais (42), et à l'actionnement de l'indicateur (22).

5. Disjoncteur de branchement selon la revendication 4, caractérisé par le fait que l'indicateur (22) du module pilote (14) est formé par un relais électromécanique (68) du type polarisé à grande sensibilité, comprenant une armature (70) mobile solidaire d'un voyant (24) mécanique dont la venue en position de saillie indique le dépassement de la puissance souscrite détecté par le circuit de surveillance (20).

6. Disjoncteur de branchement selon la revendication 4, caractérisé par le fait que l'indicateur (22) du module pilote (14) est réalisé par un compteur électronique destiné à compter et à enregistrer le nombre de dépassements de la puissance souscrite.

**Patentansprüche**

1. Abzweigschalter (10) eingeschlossen in einem mehrpoligen Niederspannungs-Verteilernetz für die Versorgung einer elektrischen Anlage eines Verbrauchers, deren vereinbarte Leistung von einem Steuermodul (14) überwacht wird, das in der Nähe oder im Innern eines elektrischen Energiezählers (12) angebracht ist, wobei das genannte Modul (14) aufweist:

einen Vorrichtung (16) zur Wahl des Kalibers, das dem Gebührentarif der vom Verbraucher vereinbarten leistung entspricht,

einen elektronsichen Überwachungskreis (20) zum Detektieren von Überschreitungen des von der Wahlvorrichtung (16) gewählten Kalibers, einen Anzeiger (22), der mit dem Überwachungskreis (20) zusammenarbeitet, um die genannten Überschreitungen dem Überwachungsbeamten anzuzeigen,

und einen Emission-Auslöser, der im Falle eines Überschreitens des Kalibers von dem Überwachungskreis (20) betätigt wird, um mit Hilfe eines Verbindungskreises (26) mit Steuerdrähten (28, 30) einen ferngesteuerten Öffnungsbefehl an den Schalter (10) zu schicken, dadurch gekennzeichnet, dass der Schalter (10) einem Auslösesteuerungs-Mechanismus (32) aufweist, der von einem gemeinsamen elektromagnetischen polarisierten Auslöser-Relais (42) gesteuert wird, welches einen Magnetkreis (46) aufweist, auf dem eine erste Auslösespule (B1) gewickelt ist, die mit dem Steuermodul (14) durch den genannten Verbindungskreis (26) verbunden ist, und eine zweite Auslösespule (B2), die an den Differential-Auslöser (92) angeschlossen ist, und dass das Öffnen des Schalters (10) durch die Erregung irgendeiner der Spulen (B1 oder B2) des polarisierten Relais (42) bewirkt wird, in Nachfolge an einen ferngesteuerten Öffnungsbefehl, der von dem Emissions-Auslöser des Steuermoduls (14) ausgesendet wird, oder nach einem von dem Differential-Auslöser übertragenen Steuersignal beim Auftreten eines Rest-Differentialfehlerstromes im Netz.

2. Mehrkalibriger Abzweigschalter gemäss Anspruch 1, der ausserdem einen Überlast-Auslöser mit regulierbarer Schwelle aufweist, dadurch gekennzeichnet, dass der genannte Überlast-Auslöser so ausgeführt ist, um im Falle eines Überschreitens der vereinbarten Leistung des örtliche Auslösen des Mechanismus (32) des Schalters (10) zu bewirken, durch Betätigung der Auslöse-Einheit (48), bevor das Steuermodul (14) einen ferngesteuerten Öffnungsbefehl an die erste Spule (B1) des Relais (42) sendet.

3. Abzweigschalter gemäss Anspruch 2, mit einem elektronischen Überlast-Auslöser, dadurch gekennzeichnet, dass das elektromagnetische Auslöse-Relais (42) dem Überlast-Auslöser, dem Differential-Auslösser (92) und dem Emissions-Auslöser des Steuermoduls (14) gemein ist, und das der elektronische Überlast-Auslöser einen Einstellungskreis (82) aufweist für das Kaliber des Schalters (10) und einen Verzögerungskreis mit einer Zeitkonstante, welche niederiger als die des Überwachungskreises (20) des Steuermoduls (14) ist, dessen auf der Wahlvorrichtung (16) angezeigtes Kaliber dem Kaliber des Einstellungskreises (82) entspricht.

4. Abzweigschalter gemäss Anspruch 1, 2 oder 3, dadurch gekennzeichnet, dass das Steuermodul (14) Eigenspeisung besitzt und je Phase einen Stromfühler (50) aufweist, mit einem Ringkern, durchquert von dem Phasenleiter (L), welcher als Primärwicklung dient, und mit einer Sekundärwicklung, die ein Ausgangssignal abgibt zum Laden eines Kondensators ($C_{11}$), der ein Energie-Reservoir bildet, das der Vorsorgung des elektronischen Überwachungskreises (20) angepasst ist, und im Falle eines Überschreitens der vereinbarten Leistung für das Aussenden eines ferngesteuerten Öffnungsbefehls an die erste Spule (B1) des Relais (42) und die Betätigung des Anzeigers (22).

5. Abzweigschalter gemäss Anspruch 4, dadurch gekennzeichnet, dass der Anzeiger (22) des Steuermoduls (14) von einem elektro-mechanischen Relais (68) von hochempfindlichem polarisierten Typ gebildet wird, das einen beweglichen Anker (70) aufweist, der mit einem mechanischen Meldezeichen (24) verbunden ist, dessen Vorsprungsstellung das Überschreiten der vereinbarten Leistung anzeigt, welches von den Überwachungskreis (20) detektiert wird.

6. Abzweigschalter gemäss Anspruch 4, dadurch gekennzeichnet, dass der Anzeiger (22) des Steuermoduls (14) von einem elektronischen Zähler gebildet wird, der dazu bestimmt ist, die Anzahl der Überschreitungen der vereinbarten Leistung au zählen und zu registrieren.

**Claims**

1. Branch circuit breaker (10) inserted in a low voltage multipole distribution system for the electric installation supply of a consumer whose subscription power is controlled by an operator module (14) disposed near by or in a counter (12) of electric energy, said module (14) comprising:

a selection device (16) of the rating corresponding to the charge tariff requested by the subscriber,

an electronic monitoring circuit (20) for detecting the exceeding of the selected rating on the selection device (16),

in indicator (22) cooperating with the monitoring circuit (20) to indicate said excesses to the control officer,

and an emission trip device, operated in the case of a rating excess by the monitoring circuit (20) to emit, by means of a connection circuit (26) with pilot wires (28, 30), a remote opening order to the circuit breaker (10), characterized by the fact that the circuit breaker (10) comprises a control mechanism (32) operated by an electromagnetic polarized common trip relay (42), comprising a magnetic circuit (46) on which are wound a first tripping coil (B1) connected to the operator module (14) by said connection circuit (26), and a second tripping coil (B2) branched to the differential trip device (92), and that the opening of the circuit breaker (10) results of the excitation of any one of the coils (B1 or B2) of the polarized relay (42), after a remote opening order emitted by the emission trip device of the operator module (14) or after a control order transmitted by the differential trip device when a residual differential fault current appears on the system.

2. Multi-rating branch cirucit breaker according to claim 1, comprising also an overload trip device with adjustable threshold, characterized by the fact that said overload trip device is arranged to initiate, when exceeding the subscribed power, the local tripping of the mechanism (32) of the circuit breaker (10) by operating the trip unit (48), before the operator module (14) emits a remote opening order towards the first coil (B1) of the relay (42).

3. Branch circuit breaker according to claim 2, comprising an electronic overload trip device, characterized by the fact that the electromagnetic trip relay (42) is common to the overload trip device, to the differential trip device (92) and to the emission trip device of the operator module (14), and that the electronic overload trip device comprises an adjustment circuit (82) of the rating of the circuit breaker (10) and a time-lag circuit with a time-constant lower than that of the monitoring circuit (20) of the operator module (14), and the rating of which, shown on the selection device (16), corresponds to that of the adjustment circuit (82).

4. Branch circuit breaker according to claim 1, 2 or 3, characterized by the fact that the prospective current operator module (14) comprises per phase a current sensor (50) with a core crossed by the phase conductor (L) constituting a primary winding, and with a secondary winding emitting an output signal in order to load a capacitor $(C_{11})$ constituting an energy reservoir conformed to the supply of the electronic monitoring circuit (20), and in the case of an exceeding of the subscribed power, to the emission of a remote opening order towards the first coil (B1) of the relay (42), and to the operating of the indicator (22).

5. Branch circuit breaker according to claim 4, characterized by the fact that the indicator (22) of the operator module (14) is constituted by an electromagnetic relay (68) of high sensibility polarized type, comprising a movable armature (70) connected with a mechanical indicator (24) which indicates, when coming into the protrusion position, the exceeding of the subscribed power detected by the monitoring circuit (20).

6. Branch circuit breaker according to claim 4, characterized by the fact that the indicator (22) of the operator module (14) is constituted by an electronic counter for counting and registering the number of exceedings of the subscribed power.

FIG.1

FIG.2

0 079 271

1

# FIG.3

# FIG.4

**FIG.5**

3

# FIG. 6